(19) Europäisches Patentamt
European Patent Office
Office européen des brevets

(11) **EP 1 783 485 A1**

(12) **EUROPEAN PATENT APPLICATION**
published in accordance with Art. 158(3) EPC

(43) Date of publication:
**09.05.2007 Bulletin 2007/19**

(21) Application number: **05780897.4**

(22) Date of filing: **24.08.2005**

(51) Int Cl.:
*G01N 27/447* (2006.01)   *G01N 27/26* (2006.01)
*G01N 37/00* (2006.01)   *G01N 27/62* (2006.01)

(86) International application number:
**PCT/JP2005/015325**

(87) International publication number:
**WO 2006/022283 (02.03.2006 Gazette 2006/09)**

(84) Designated Contracting States:
**CH DE FR GB LI SE**

(30) Priority: **25.08.2004 JP 2004245728**

(71) Applicant: **Human Metabolome Technologies, Inc.
Tsuruoka-shi, Yamagata 997-0052 (JP)**

(72) Inventors:
• **SUGIMOTO, M.,**
**c/o Inst. for Advanced Biosciences
Tsuruoka-shi,
Yamagata 997-0017 (JP)**

• **SOGA, T.,**
**c/o Inst. for Advanced Biosciences
Tsuruoka-shi,
Yamagata 997-0017 (JP)**
• **TOMITA, M.,**
**c/o Shonan Fujisawa Campus
Fujisawa-shi,
Kanagawa 252-8520 (JP)**

(74) Representative: **Grünecker, Kinkeldey,
Stockmair & Schwanhäusser
Anwaltssozietät
Maximilianstrasse 58
80538 München (DE)**

(54) **METHOD OF PREDICTING TRAVELING TIME OF IONIC COMPOUND BY ELECTROPHORESIS MEASURING**

(57)   When the migration time of a low molecular weight compound having an unknown migration time in microchip electrophoresis, capillary electrophoresis, or a capillary electrophoresis mass spectrometer is predicted, first, with respect to a substance having a known electrophoretic migration time, characteristic quantities (descriptors) thereof which can be numerically expressed from a structure thereof are computed to predict the relation between the characteristic quantities (descriptors) and the migration time; the migration times of some substances are measured by electrophoresis or an electrophoresis mass spectrometer to learn about the relation; and using the learnt result, the migration time of the substance having an unknown migration time in the electrophoresis or electrophoresis mass spectrometer is predicted from the structure thereof.

Fig. 3

EP 1 783 485 A1

**Description**

TECHNICAL FIELD

The present invention relates to a method for predicting the migration time of ionic compounds by electrophoretic measurement in which the detection time of ionic compounds is predicted which are measured such as by microchip electrophoresis, capillary electrophoresis (CE), or a capillary electrophoresis mass spectrometer (CE/MS) which employs a combination of capillary electrophoresis (CE) and mass spectroscopy (MS).

BACKGROUND ART

Conventionally, those peaks measured by a separation analysis apparatus such as by microchip electrophoresis, capillary electrophoresis (CE), or high performance liquid chromatography (HPLC) have been compared with the peak of a standard substance, having a known compound name, in terms of the time of its occurrence, thereby identifying substances (see the publication of Japanese Patent No. 3341765). However, since only a limited number of standard substances are available for all compounds, conventional methods could not identify substances in terms of all of their peaks.

To overcome this problem, a computer assisted method has been developed for predicting the detection time of each substance based on the principle of migration or retention by CE or liquid chromatography (LC) (see Anal. Chem., 1998, 70, 173-181; Analyst, 1998, 123, 1487-1492; Anal. Chem., 1999, 71, 687-699; Anal. Chem., 2001, 73, 1324-1329; Electrophoresis, 2003, 24, 1596-1602; and Anal. Biochem., 1989, 179, 28-33).

Such a method has been also developed for predicting migration times or elution times using an artificial intelligence technologies such as Artificial Neural Networks (ANN) (see J. Pharmaceutical and Biomedical Analysis 1999, 21, 95-103; J. Pharmaceutical and Biomedical Analysis 2002, 28, 581-590; Anal. Chem., 2003, 75, 1039-1048; J. ChromatogrA, 2001, 927,211-218; J. ChromatogrA, 2002, 971, 207-215; and Electrophoresis, 2002, 23, 1815-1821).

However, either method is adapted only for the prediction of a small number of substance groups that have similar physical and chemical properties. Thus, such a method has never been found that enables simultaneous prediction of the detection time of hundreds of various types of compounds.

The following two types of methods are available for predicting the migration time of each substance in electrophoretic analysis.

(1) Prediction method employing the principle of electrophoretic mobility
This prediction method is based on the principle that the mobility of each electrophoretic substance is "proportional to the electric charge of the substance and inversely proportional to the sample viscosity and hydrated ionic radius." However, this prediction method has been devised on various assumptions such as "ions are assumed to be spherical" or "no slip is assumed to occur between an electrophoretic buffer solution and a substance." Thus, a number of cases have been reported in which there is a mismatch between the actually measured and predicted values of the migration time of a substance. Furthermore, only available are those studies that were made to predict only a small number of particular substance groups such as homologues. Some numeric parameters of a predicted formula are individually tuned for each substance group, and thus this method cannot be employed unless the type of substances involved is known in advance.
(2) Prediction method employing neural networks

In the past, this method has been employed as follows. That is, of those descriptors that numerically represent the features of a compound in CE analysis, about three descriptors that are thought to have great effects on mobility are selectively focused using multiple regression analysis. Then, ANN is employed for learning about the relation between the resulting descriptors and the mobility of the substance. However, the resulting descriptors differ for each substance group, and thus, even this method can be applied only to the prediction of the mobility of a small number of particular substance groups.

On the other hand, CE/MS has been recently developed which has a combination of capillary electrophoresis and mass spectroscopy to provide high sensitivity and high selectivity (see Japanese Patent Laid-Open Publication No. 2001-83119). However, there was also a problem with this CE/MS that a substance is subjected, during its migration through the capillary, to pull pressure or back pressure from MS that is coupled to the outlet of the capillary, and thus the same prediction model cannot be used as it is between CE and CE/MS.

DISCLOSURE OF THE INVENTION

The present invention was developed to solve the aforementioned conventional problems. It is therefore an object of the invention to predict the mobility of a group of various types of mixed low molecular weight compounds not only in CE but also in microchip electrophoresis or CE/MS, which nobody has ever succeeded.

The present invention solves the aforementioned problems by being applied to the prediction of the migration time of a substance having an unknown migration time in microchip electrophoresis, capillary electrophoresis, or a capillary electrophoresis mass spectrometer. First, with respect to a substance having a known electrophoretic migration time, its characteristic quantities (descriptors) which can be numerically expressed from its structure (e.g., such as radius, mass, and net charge) are computed to predict the relation between the characteristic quantities (descriptors) and the migration time. Then, the migration times of some substances are measured by electrophoresis or an electrophoresis mass spectrometer to learn about the relation. Using the learnt result, the migration time of the substance having an unknown migration time in the electrophoresis or electrophoresis mass spectrometer is predicted from the structure thereof.

The invention may be also configured such that the characteristic quantities also include a descriptor indicative of a molecular feature, the descriptor being calculated from the three-dimensional structure predicted based on the two-dimensional structure of a substance, an ionization exponent calculated from the two-dimensional molecular structure, and the net charge of a compound.

The invention may be also configured such that the three-dimensional structure has such a shape as to take the most stable structure as a single compound in terms of energy, assuming that the structure is singly present in a vacuum without being affected by anything else.

The invention may be also configured such that the net charge of the compound is calculated using the following Equations.

$$\alpha^{-} = \frac{10^{(pKa-pH)}}{10^{(pKa-pH)}+1} - 1 \dots (1)$$

$$\alpha^{+} = \frac{10^{(pKa-pH)}}{10^{(pKa-pH)}+1} \dots (2)$$

$$q = \sum_{i=1}^{n} \alpha_{i}^{-} + \sum_{j=1}^{m} \alpha_{j}^{+} \dots (3)$$

(wherein i and j are the subscripts of the acid dissociation constant pKa; n is the number of pKa of a substance producing electric charges with negative values; m is the number of pKa of a substance producing electric charges with positive values; and pH is the pH value of an electrophoretic buffer solution to be used with microchip electrophoresis, CE, or CE/MS.)

The invention may be also configured such that the migration time is a relative migration time which is obtained by normalizing the migration time of a compound measured in electrophoresis or an electrophoresis mass spectrometer with the migration time of an internal standard substance.

The invention may be also configured such that the relation is learnt, for example, by a back propagation method using a neural network of a three-layer structure having an input layer, a hidden layer, and an output layer.

The invention may be also configured such that all the descriptor values of a compound and the net charge are given to the input layer, while the relative migration time of the compound is given to the output layer.

The invention may be also configured such that when there is a big difference between the maximum and minimum of each value given to the input layer and the output layer, logarithmic normalization is performed, whereas linear normalization is performed when the difference is small.

The invention may be also configured such that the same data are learnt by multiple neural networks, and an average value is taken as output.

According to the present invention, a structural formula is given to any type of ionic compound, thereby allowing its migration time in microchip electrophoresis, CE, and CE/MS to be predicted based on its two-dimensional structure with high accuracy. Accordingly, a substance detected by microchip electrophoresis, CE, or CE/MS can be identified once its structural formula is known, without a standard substance.

Furthermore, the mobilities of various types of molecules can be predicted at a time in microchip electrophoresis, CE, or CE/MS analysis, which has not been implemented by conventional methods. Accordingly, all the migration times of candidate compounds can be predicted and compared with the migration time of an unknown component detected by microchip electrophoresis, CE, or CE/MS, thereby identifying an unknown peak of a sample, the type of a substance contained therein being not known.

BRIEF DESCRIPTION OF THE DRAWINGS

Fig. 1 is a schematic diagram illustrating an example configuration of a capillary electrophoresis mass spectrometer to which the present invention is applied;
Fig. 2 is a view illustrating an example of the relation between the two-dimensional molecular structure and the three-dimensional molecular structure to be predicted by the present invention;
Fig. 3 is a view illustrating, by way of example, the structure of a neural network and the values assigned to the input and output layers to be used with the present invention;
Fig. 4 is a view illustrating the configuration of an ANN ensemble to be used with the present invention; and
Fig. 5 is a view illustrating an example of the relation between the measured and predicted values of a relative migration time according to an implementation example of the present invention.

BEST MODE FOR CARRYING OUT THE INVENTION

The present invention will now be described below in more detail with reference to the accompanying drawings in accordance with the embodiment.

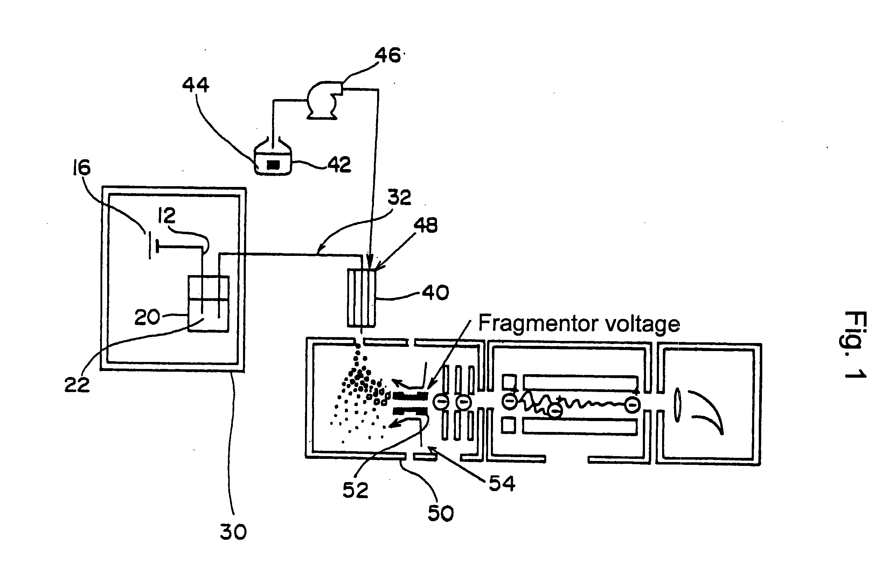

As shown in Fig. 1, CE/MS or one of those to which the present invention is applied includes, for example, a capillary electrophoresis apparatus (CE) 30 for separating a sample, an electrospray needle 40 serving as a nebulizer for nebulizing the separated sample, and a mass spectrometer (MS) 50 for analyzing ionic compounds from the nebulized sample.

The CE 30 includes a capillary 32, a buffer solution reservoir 20 for retaining an electrophoretic buffer solution (also referred to as a buffer) 22 introduced into the capillary 32 for separating a sample, a platinum electrode 12 with its tip soaked in the electrophoretic buffer solution 22, and a high-voltage power supply 16 for applying a high voltage (e.g., -30 kV to +30 kV) to the platinum electrode 12.

One end of the capillary 32 is soaked in the electrophoretic buffer solution 22, while the other end is connected to the electrospray needle 40.

The electrospray needle 40 is supplied with a sheath liquid 44, which is retained in a sheath liquid reservoir 42, by a pump 46 in an amount suitable for electrospray as well as with a nebulizer gas (e.g., nitrogen gas) 48 that produces fine liquid drops to accelerate ionization.

The MS 50 includes a cone 52, to which a fragmentor voltage is applied to accelerate ions and bombard the nitrogen gas therewith so as to produce fragment ions and which is supplied with a drying gas (e.g., nitrogen gas) 54 for volatilizing a solvent that comes therein from the CE 30.

In such an arrangement, a sample is placed in the buffer solution reservoir 20, and a predetermined high voltage is applied to the platinum electrode 12. This causes the sample and the electrophoretic buffer solution 22 to move to the electrospray needle 40 through the capillary 32. At this time, the ionic compounds are separated due to a difference in migration speed resulting from a difference in ion radius and ionicity, and thus migrate to the electrospray needle 40 in a band shape. Then, the ionic compounds are nebulized through the electrospray needle 40, and analyzed at the MS 50.

The migration time is predicted according to the present invention as follows.

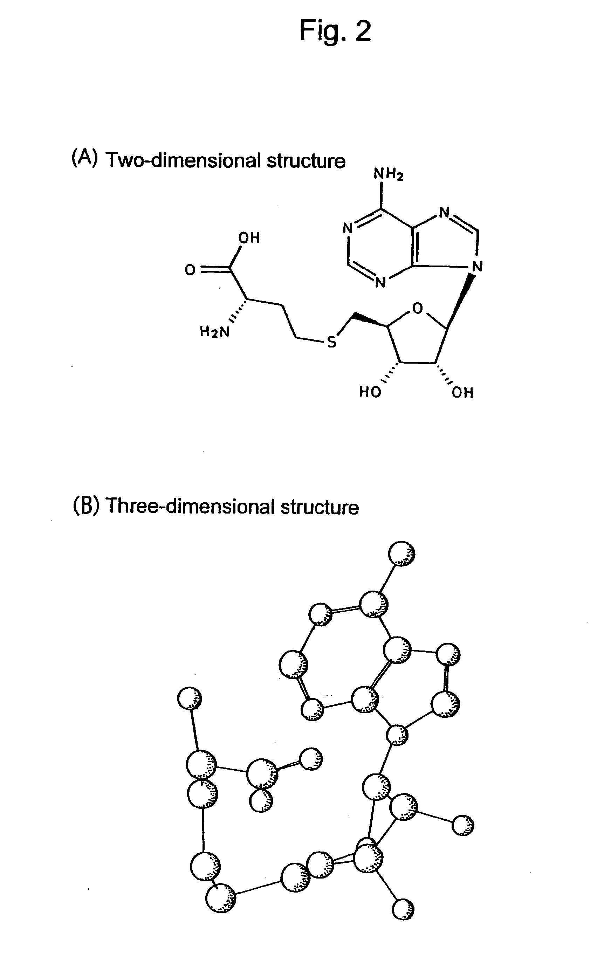

In this embodiment, to predict the mobility of an ionic compound of any type in the CE/MS, the three-dimensional structure of a substance is first predicted based on its two-dimensional structure as illustrated in Fig. 2. At this time, the three-dimensional structure is assumed to exist singly in a vacuum without being affected by anything else, and is allowed to have such a shape as to take the most stable structure as a single compound in terms of energy.

Then, from the three-dimensional structure thus predicted, a descriptor indicative of a molecular feature is computed. For example, as the descriptor, it is possible to employ a standard descriptor of Molecular Operating Environent (MOE) by Chemical Computing Group Inc.

On the other hand, from the two-dimensional molecular structure, an acid dissociation constant pKa is calculated to find the net charge of a compound using Equations (1) to (3) below.

$$\alpha^{-} = \frac{10^{(pKa-pH)}}{10^{(pKa-pH)}+1} - 1 \dots(1)$$

$$\alpha^{+} = \frac{10^{(pKa-pH)}}{10^{(pKa-pH)}+1} \dots(2)$$

$$q = \sum_{i=1}^{n} \alpha_{i}^{-} + \sum_{j=1}^{m} \alpha_{j}^{+} \dots(3)$$

(wherein i and j are the subscripts of the acid dissociation constant pKa; n is the number of pKa of a substance producing electric charges with negative values; m is the number of pKa of a substance producing electric charges with positive values; and pH is the pH value of an electrophoretic buffer solution to be used with microchip electrophoresis, CE, or CE/MS.)

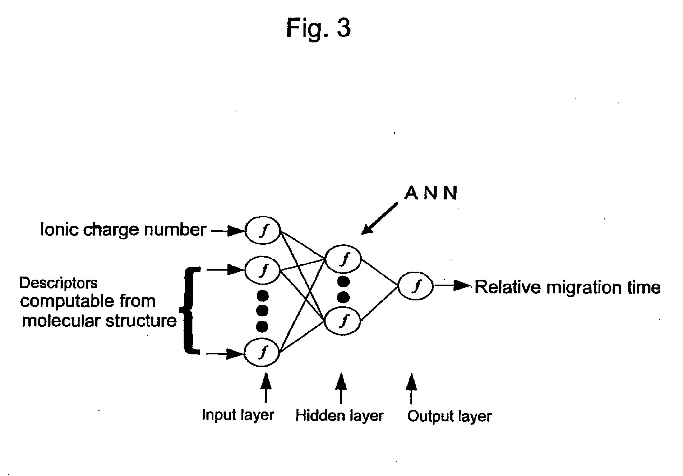

A relation between the descriptor, the acid dissociation constant pKa, and the net charge of the compound, and the relative migration time that is obtained by normalizing the migration time of the compound measured by the CE/MS with the migration time of the internal standard substance, is then learnt, e.g., by the back propagation method using a neural network ANN having a three-layer structure (one input layer, one hidden layer, and one output layer) as illustrated in Fig. 3. Fig. 3 shows the structure of the neural network ANN and those values that are assigned to the input and output layers.

The output layer of the neural network ANN has a fixed number of nodes of one, to which the relative migration time of the compound normalized with the migration time of the internal standard substance is given.

The following is given to the input layer.

(1) Among all the substances to be learnt, all of those having even one different compound descriptor are employed.
(2) Among the values of acid dissociation constants pKa, one value that is closest to the pH of the electrophoretic buffer solution when measured is employed.
(3) The net charge is employed which is found by Equations (1) to (3).

Accordingly, the number of nodes of the input layer is the sum of the number of descriptors to be input, the acid dissociation constant pKa, and the net charge.

The value to be given to the input layer and the output layer is normalized between 0.1 to 0.9. That is, when there is a big difference between the maximum value and the minimum value, logarithmic normalization is performed using Equation (4), whereas when the difference is small, linear normalization is performed using Equation (5).

$$V^* = 0.8 * (\log_{10}V - \log_{10}V_{min}) / (\log_{10}V_{max} - \log_{10}V_{min}) + 0.1 \quad \dots(4)$$

$$V^* = 0.8 * (V - V_{min}) / (V_{max} - V_{min}) + 0.1 \dots(5)$$

wherein V is the value to be normalized, $V_{max}$ and $V_{min}$ are the maximum value and the minimum value of the descriptor of interest, respectively, and $V^*$ is a normalized value.

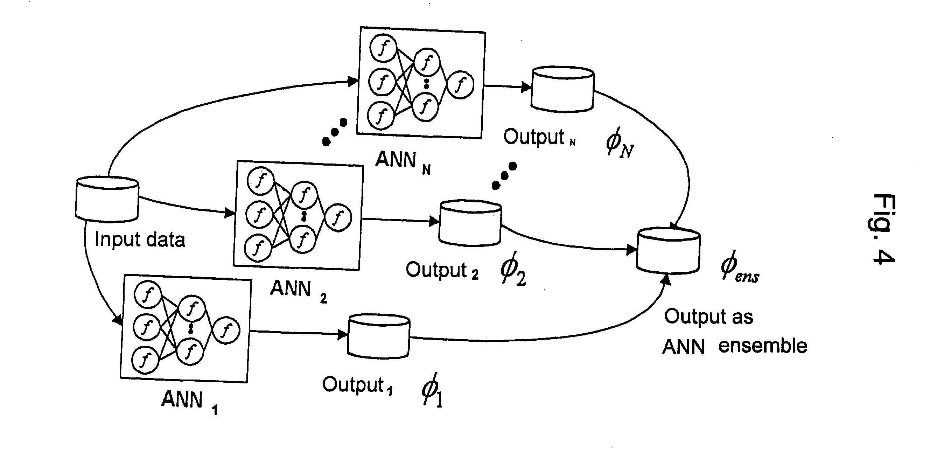

Furthermore, as shown in Fig. 4, the ANN ensemble method can be used for learning with improved accuracy, in which the same learning data are learnt by multiple neural networks $ANN_1$ to $ANN_N$ and the outputs from each ANN are averaged. Note that this ensemble method can be omitted.

The processing according to the present invention can be entirely performed using a personal computer.

In accordance with the present invention, the migration time of a cationic low molecular weight molecule was predicted.

(1) Conditions for CE/MS analysis

The capillary 32 employed was a fused silica capillary having an inner diameter of 50 $\mu$m, an outer diameter of 360 $\mu$m, and a total length of 100 cm. The electrophoretic buffer solution 22 employed was a 1M formic acid (pH = 1.8). Measurements were made at an applied voltage of +30 kV with the capillary 32 at a temperature of 20°C. A sample was injected for three seconds at 50 mbar using the pressurization method. The mass spectrograph (MS) 50 was operated in the positive ion mode of the electrospray ionization method with the capillary being set at a voltage of 4000 V and the fragmentor at 100 V. Nitrogen was employed as the drying gas 54, and measurements were made with the gas at a temperature of 300°C and at a flow rate of 10 l/minute.

The sheath liquid 44 employed was 10 mM ammonium acetate with a 50% methanol aqueous solution and fed at a flow rate of 10 $\mu$l/minute. The measured sample was doped with methionine sulfone as the internal standard substance, so that the migration time of each measured substance is corrected using the migration time of methionine sulfone to determine the relative migration time.

(2) Computation of data to be used with ANN

The two-dimensional molecular structure employed was a structure of one of those substances registered in the MDL/Mol format by MDL with KEGG Ligand Database, which can be downloaded at http://ligand.genome.ad.jp:8080/compound/.

The Molecular Operating Environent (MOE) by Chemical Computing Group Inc. was used for the prediction of the three-dimensional molecular structure from the two-dimensional molecular structure and for the descriptor of a substance feature. That is, the Energy Minize function of MOE was used for the prediction of the three-dimensional structure to compute 192 standard descriptors.

The software "pKa DB" by Advanced Chemistry Developmenet was used to compute the ionization exponent pKa of a substance, and based on the resulting pKa, the ionic charge number was calculated by Equations (1) to (3).

The relative migration time used was a value that was obtained by dividing the migration time of the substance in question by the migration time of methionine sulfone.

(3) Computation of ANN

i. Learning method

The cross-validation method below was used for learning ANN. The 271 pieces of measured data were randomly divided into two groups (about 90% of learning data and the remaining 10% of test data). The learning data were used for learning about ANN, and the learnt ANN were used to predict test data. With the next attempt being planned so as not to choose the same data as test data, this procedure was repeated ten times so that all pieces of data are chosen as test data at least once.

ii. Normalization of data

Those values assigned to the input and the output layers of ANN and differing from $10^3$ were subjected to logarithmic normalization using Equation (4), whereas those values equal to or less than $10^3$ were subjected to linear normalization using Equation (5).

iii. The ANN learning parameters were set as follows.

The learning rate employed for determining the speed of learning was provided in four ways as 0.03, 0.04, ... and, 0.07.

The momentum employed for determining the slowness of learning was 0.9.

The number of the node in the hidden layer employed was provided in ten ways as 10, 20, ..., and 100.

The number of times of learning (epoch number) employed was 8,000.

Furthermore, the initial weights (numerical coefficients among nodes) between units were generated using random numbers. Different seeds of random numbers were employed to generate ten types of initial weight patterns for all the combinations of the aforementioned settings. That is, 400 patterns of learning parameters equal to 4 (learning rates) x 10 (hidden layers) x 10 (random numbers) were used for learning about ANNs.

(4) Computation of ANN ensemble

Of the ANN's found by (3), those outputs of learning data with the highest to the 30th highest correlation coefficients between the measured value and the predicted value were averaged, and the resulting value was employed as the predicted relative migration time of the compound.

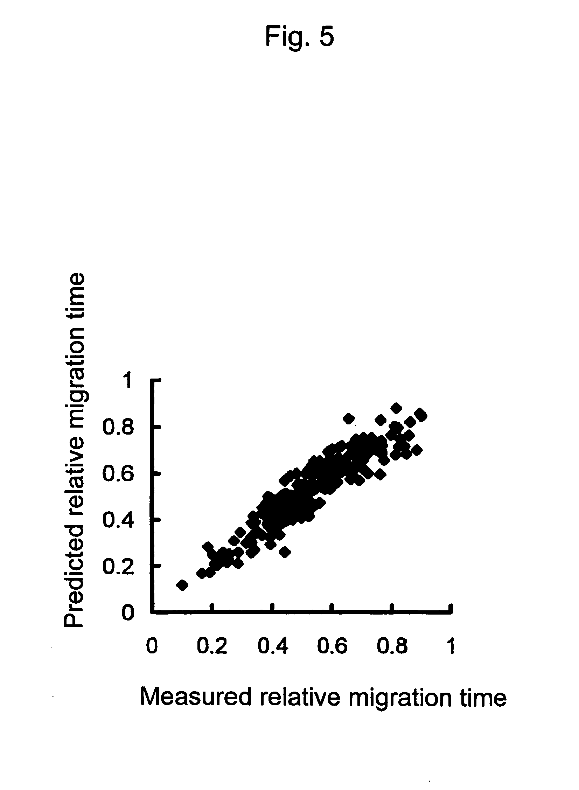

Fig. 5 shows the relation between the measured value and the predicted value of the relative migration time, which was used to predict 271 cations under the aforementioned conditions. The correlation coefficient between the relative migration times predicted by this method and the relative migration times actually measured by CE/MS was as high a value as 0.931.

Note that the embodiment employs a mass spectrometer (MS) for ionization by the electrospray method (ESI); however, the ionization method is not limited thereto. It is also possible to employ the atmospheric pressure chemical ionization method (APCI) or the fast atom bombardment method (FAB).

Furthermore, the mass spectrometer is not limited to the quadrupole type mass spectrometer with a single stage as illustrated. It is also possible to employ a mass spectrometer of other types such as of a magnetic field type, a time of flight type, or ion trap type, or alternatively a tandem mass spectrometer (MS/MS or $MS^n$). Furthermore, without being limited to CE/MS, CE can also be singly employed. Furthermore, not CE but microchip electrophoresis may also be employed.

Furthermore, for prediction purposes, the three-dimensional structure may not need to be predicted from the two-dimensional structure. Although there may be some degradation in accuracy, only the two-dimensional structure can be used to predict the migration time of a compound.

Furthermore, although there may be some degradation in accuracy, not ANN ensemble but a single ANN can also be used for prediction.

Furthermore, without ANN, predictions can be made by a method for learning the relation between multiple numeric parameters such as by the multiple regression analysis or the support vector machine.

Furthermore, data in a file of any format can be equally used to make predictions so long as the format allows for providing a two-dimensional molecular structure even when it is in other than the MOL format by MDL.

Furthermore, data in any database (e.g., such as Merck Index) other than the KEGG Ligand Database can be equally used to make predictions so long as the database has such registered data that allows for providing a two-dimensional molecular structure.

Furthermore, the method for normalizing the numerical values to be used for the input and the output layers of ANN according to the embodiment performs logarithmic normalization on such data that has a big difference between its maximum and minimum values or linear normalization on the other. However, although there may be some degradation in accuracy, any normalization method can also be employed.

INDUSTRIAL APPLICABILITY

The present invention can be used to predict the detection time of an ionic compound which is measured by microchip electrophoresis, capillary electrophoresis (CE), or a capillary electrophoresis mass spectrometer (CE/MS) that is a combination of capillary electrophoresis (CE) and mass spectroscopy (MS).

**Claims**

1. A method for predicting a migration time of an ionic compound by electrophoretic measurement, **characterized in that**, when the migration time of a substance having an unknown migration time in microchip electrophoresis, capillary electrophoresis, or a capillary electrophoresis mass spectrometer is predicted,
first, with respect to a substance having a known electrophoretic migration time, characteristic quantities (descriptors) thereof which can be numerically expressed from a structure thereof are computed to predict relation between the characteristic quantities (descriptors) and the migration time;
the migration times of some substances are measured by electrophoresis or an electrophoresis mass spectrometer to learn about the relation; and
using the learnt result, the migration time of the substance having an unknown migration time in the electrophoresis or electrophoresis mass spectrometer is predicted from the structure thereof.

2. The method for predicting a migration time of an ionic compound by electrophoretic measurement according to claim 1, wherein the characteristic quantities (descriptors) include a descriptor indicative of a molecular feature, the descriptor being calculated from a three-dimensional structure predicted based on a two-dimensional structure of the substance, an ionization exponent calculated from the two-dimensional molecular structure, and a net charge of a compound.

3. The method for predicting a migration time of an ionic compound by electrophoretic measurement according to claim 2, wherein the three-dimensional structure has such a shape as to take the most stable structure as a single compound in terms of energy, assuming that the structure is singly present in a vacuum without being affected by anything else.

4. The method for predicting a migration time of an ionic compound by electrophoretic measurement according to claim 2, wherein that the net charge of the compound is calculated using the following Equations:

$$\alpha^- = \frac{10^{(\text{pKa}-\text{pH})}}{10^{(\text{pKa}-\text{pH})}+1} - 1 \ldots (1)$$

$$\alpha^+ = \frac{10^{(\text{pKa}-\text{pH})}}{10^{(\text{pKa}-\text{pH})}+1} \ldots (2)$$

$$q = \sum_{i=1}^{n} \alpha_i^- + \sum_{j=1}^{m} \alpha_j^+ \ldots (3)$$

(wherein i and j are subscripts of an acid dissociation constant pKa; n is a number of pKa of a substance producing electric charges with negative values; m is a number of pKa of a substance producing electric charges with positive values; and pH is a pH value of an electrophoretic buffer solution to be used with the microchip electrophoresis, the capillary electrophoresis, or the capillary electrophoresis mass spectrometer).

5. The method for predicting a migration time of an ionic compound by electrophoretic measurement according to claim 1, wherein the migration time is a relative migration time which is obtained by normalizing the migration time of the compound measured in electrophoresis or an electrophoresis mass spectrometer with the migration time of an internal standard substance.

6. The method for predicting a migration time of an ionic compound by electrophoretic measurement according to claim 1, wherein the relation is learnt using a neural network of a multi-layer structure having an input layer, a hidden layer, and an output layer.

7. The method for predicting a migration time of an ionic compound by electrophoretic measurement according to claim 6, wherein all the descriptor values of the compound and the net charge are given to the input layer, and the relative migration time of the compound is given to the output layer.

8. The method for predicting a migration time of an ionic compound by electrophoretic measurement according to claim 7, wherein, when there is a big difference between the maximum and minimum of each value given to the input layer and the output layer, logarithmic normalization is performed, and, when the difference is small, linear normalization is performed.

9. The method for predicting a migration time of an ionic compound by electrophoretic measurement according to claim 6, wherein the same data are learnt by multiple neural networks, and an average value is taken as output.

# Fig. 1

Fragmentor voltage

# Fig. 2

(A) Two-dimensional structure

(B) Three-dimensional structure

# Fig. 3

ANN

Ionic charge number →

Descriptors computable from molecular structure

Relative migration time

Input layer    Hidden layer    Output layer

# Fig. 4

## Fig. 5

## INTERNATIONAL SEARCH REPORT

| | International application No. |
|---|---|
| | PCT/JP2005/015325 |

A. CLASSIFICATION OF SUBJECT MATTER
*G01N27/447* (2006.01), *G01N27/26* (2006.01), *G01N37/00* (2006.01), *G01N27/62* (2006.01)

According to International Patent Classification (IPC) or to both national classification and IPC

B. FIELDS SEARCHED

Minimum documentation searched (classification system followed by classification symbols)
*G01N27/447* (2006.01), *G01N27/26* (2006.01), *G01N37/00* (2006.01), *G01N27/62* (2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)
JSTPlus(JOIS)

C. DOCUMENTS CONSIDERED TO BE RELEVANT

| Category* | Citation of document, with indication, where appropriate, of the relevant passages | Relevant to claim No. |
|---|---|---|
| A | JP 2002-5886 A (Japan Science and Technology Corp.), 09 January, 2002 (09.01.02), Full text; all drawings & EP 1312915 A1 & WO 01/98768 A1 | 1-9 |
| A | JP 2003-25698 A (Keio University), 07 February, 2003 (07.02.03), Full text; all drawings (Family: none) | 1-9 |
| P,X | JP 2004-264069 A (Daiichi Pharmaceutical Co., Ltd.), 24 September, 2004 (24.09.04), Full text; all drawings (Family: none) | 1 |

☐ Further documents are listed in the continuation of Box C.　　☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>04 November, 2005 (04.11.05) | Date of mailing of the international search report<br>29 November, 2005 (29.11.05) |
|---|---|
| Name and mailing address of the ISA/<br>Japanese Patent Office | Authorized officer |
| Facsimile No. | Telephone No. |

Form PCT/ISA/210 (second sheet) (April 2005)

14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3341765 B
- JP 2001083119 A

**Non-patent literature cited in the description**

- *Anal. Chem.,* 1998, vol. 70, 173-181
- *Analyst,* 1998, vol. 123, 1487-1492
- *Anal. Chem.,* 1999, vol. 71, 687-699
- *Anal. Chem.,* 2001, vol. 73, 1324-1329
- *Electrophoresis,* 2003, vol. 24, 1596-1602
- *Anal. Biochem.,* 1989, vol. 179, 28-33
- *J. Pharmaceutical and Biomedical Analysis,* 1999, vol. 21, 95-103
- *J. Pharmaceutical and Biomedical Analysis,* 2002, vol. 28, 581-590
- *Anal. Chem.,* 2003, vol. 75, 1039-1048
- *J. ChromatogrA,* 2001, vol. 927, 211-218
- *J. ChromatogrA,* 2002, vol. 971, 207-215
- *Electrophoresis,* 2002, vol. 23, 1815-1821